# EUROPEAN PATENT APPLICATION

(11) **EP 1 099 503 A2**
(43) Date of publication of application: **16.05.2001**
(21) Application number: 00108574.5
(22) Date of filing: 19.04.2000
(51) Int. Cl.: B23D 51/10

(54) **A saw blade clamp device for an electric reciprocating saw**

(30) Priority: 09.11.1999 CN 99240248
(71) Applicant: Suzhou Taihu Industrial Co. Ltd., Wuxian City, Jiangsu Province, 215128 (CN)
(72) Inventor: Yang, Zhibin, c/o Suzhou Taihu Industrial Co. Ltd., Wuxian City, Jiangsu Province, 215128 PR (CN)
(74) Representative: Kirschner, Klaus Dieter, Dipl.-Phys.

(57) **Abstract**

The present invention discloses a clamp device for an electric reciprocating saw. Said device comprises a slide rod (1). A slot (3) is provided on the head of the slide rod for inserting a saw blade. A pin hole (4) is provided on the slot horizontally. A pin (5) is inserted into the pin hole. One end of the pin is inserted into a clamp hole (6) on the saw blade to press the saw blade against one side of the slot. A rotatable sleeve (7) is put around the exterior of the slide rod. The rotatable sleeve is connected with the slide rod by a thread (8). A cone face (9) is provided on the front portion of the inner hole of the rotatable sleeve (7) to press against the pin.

## Description

The present invention relates to an electric reciprocating saw, and more particularly to a clamp device for an electric reciprocating saw.

An electric reciprocating saw is an electric tool being used in a wide range of areas, which can lower the labor intensity and raise the work efficiency. In prior art, every clamp device for an electric reciprocating saw can only clamp a saw blade with a certain thickness, and the clamp device is much unstable when it clamps other blades with different thickness. On the other hand, there is strict restriction to the size of the clamp hole, since a bigger clamp hole will lead to loosen the saw blade while in use.

The objective of the present invention is to provide a clamp device for an electric reciprocating saw capable of clamping saw blades with different thickness and not strictly restricting the size of clamp hole.

To achieve this objective, the present invention provides a clamp device which is characterized in that said device comprises a slide rod, on the head of which slide rod a slot is provided for inserting a saw blade, a pin hole is provided in said slide rod ending on the slot, a pin is inserted into the pin hole, one end of which pin is inserted into a clamp hole on the saw blade to press the saw blade against one side of the slot, a sleeve is arranged around the exterior of the slide rod and is connected with the slide rod to be movable in a longitudinal direction thereof, and in that a guide face is provided on an interior surface of the sleeve to press against the pin. The clamp device for an electric reciprocating saw of the present invention is very convenient to use and the saw blade will not loosen when it is in use.

According to a preferred embodiment of the present invention the clamp device is characterized in that the pin hole is provided perpenticular to the longitudinal direction of the slide rod, to ensure a tight and secure grip of the saw blade by the pin.

According to a preferred embodiment of the present invention the clamp device is characterized in that the sleeve is rotatable with respect to the slide rod and is connected to the slide rod by means of a thread whereby the sleeve is connected with the slide rod to be movable in a longitudinal direction thereof.

According to a preferred embodiment of the present invention the clamp device is characterized in that in that the guide face is a cone face inclined with respect to the longitudinal direction to the slide rod which is a simple and efficient embodiment of the guide face.

According to a preferred embodiment of the present invention the clamp device is characterized in that a lining sleeve is provided on the circumferential surface of the slide rod, the pin passes through a wall hole provided on the lining sleeve and presses against the cone face of the inner hole of the rotatable sleeve.

According to a preferred embodiment of the present invention the clamp device is characterized in that the end of the pin which is inserted into the clamp hole, is a cone shaped head

According to a preferred embodiment of the present invention the clamp device is characterized in that the end of the pin, which presses against the cone face is a spherical shaped head.

According to the preferred embodiment of the present invention, a pin is used to press the inserted saw blade against one side of the slot, thus the clamp device of the present invention can clamp saw blades with different thickness. In addition, the head portion of one end of the pin is cone-shaped and it is pressed into the clamp hole on the saw blade to fix the saw blade. Therefore, there is no strict restriction to the size of the clamp hole on the blade, and the size of the clamp hole can be maintained in a certain range.

According to the preferred embodiment of the present invention, the pin is pressed tightly by the cone face of the inner hole of the rotatable sleeve, and the rotatable sleeve is connected with the slide rod by a thread. Therefore, the clamp device of the present invention will not loosen during operation, and the saw blade can be clamped firmly. In addition, a lining sleeve is put on the head of the slide rod having an open slot. Therefore, the saw blade can be clamped firmly without loosen during the operation under a heavy load.

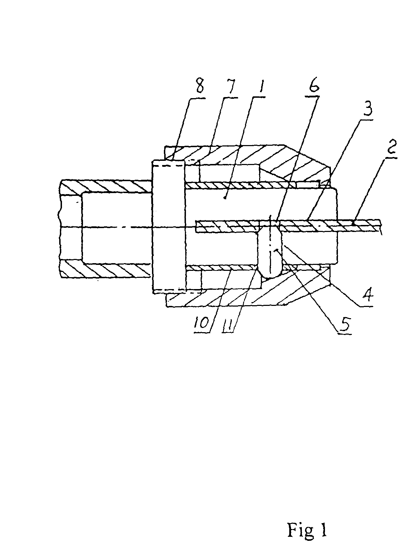

A preferred embodiment of the invention will now be described in detail in conjunction with the accompanying Figure 1 which is a structional view showing a clamp device for an electric reciprocating saw.

In this Figure, 1 represents a slide rod; 2 represents a saw blade; 3 represents a slot; 4 represents a pin hole; 5 represents a pin; 6 represents a clamp hole; 7 represents a rotatable sleeve; 8 represents a hread; 9 represents a cone face; 10 represents a sleeve and 11 represents a wall hole

Referring to Figure 1, the clamp device for an electric reciprocating saw of the present invention comprises a slide rod 1. A slot 3 is provided on the head of the slide rod 1 for inserting a saw blade 2. A pin hole 4 is provided on the slot 3 horizontally and a pin 5 is inserted into the pin hole 4. One end of the pin 5 is inserted into a clamp hole 6 on the saw blade 2 to press the saw blade 2 against one side of the slot 3.

A rotatable sleeve 7 is put around the exterior of the slide rod 1, and the rotatable sleeve 7 is connected with the slide rod I by a thread 8. A cone face 9 is provided on the front portion of the inner hole of the rotatable sleeve 7 to press against the pin 5. A lining sleeve 10 is provided on the circumferential surface of the slide rod 1. The pin 5 passes through a wall hole 11 provided on the lining sleeve 10 and presses against the cone face 9 of the inner hole of the rotatable sleeve 7.

The end of the pin 5, which is inserted into the clamp hole 6, is a cone shape head while the other end of the pin 5, which presses against the cone face 9, is a spherical shape head. According to the present invention, the inserted saw blade 2 is pressed firmly against one side of the slot 3, thus the clamp device of the present invention can clamp saw blades 2 with different thickness. In addition, the head portion of one end of the pin 5 is cone-shaped and it is pressed into the clamp hole 6 on the saw blade 2 to fix the saw blade 2. Therefore, there is no strict restriction to the size of the clamp hole 6 on the blade 2, and the size of the clamp hole 6 can be maintained in a certain range.

According to the present invention, the pin 5 is pressed tightly by the cone face 9 of the inner hole of the rotatable sleeve 7, and the rotatable sleeve 7 is connected with the slide rod 1 by a thread 8. Therefore, the clamp device of the present invention will not loosen during operation, and the saw blade 2 can be clamped firmly.

## Claims

1. A clamp device for a saw blade, characterized in that said device comprises a slide rod (1), on the head of which slide rod (1) a slot (3) is provided for inserting a saw blade (2), a pin hole (4) is provided in said slide rod (1) ending on the slot (3), a pin (5) is inserted into the pin hole (4), one end of which pin (5) is inserted into a clamp hole (6) on the saw blade (2) to press the saw blade (2) against one side of the slot (3), a sleeve (7) is arranged around the exterior of the slide rod (1) and is connected with the slide rod (1) to be movable in a longitudinal direction thereof, and in that a guide face (9) is provided on an interior surface of the sleeve (7) to press against the pin (5).

2. The clamp device as claimed in claim 1, characterized in that the pin hole (4) is provided perpenticular to the longitudinal direction of the slide rod (1).

3. The clamp device as claimed in claim 1 or 2, characterized in that the sleeve (7) is rotatable with respect to the slide'rod (1) and is connected to the slide rod (1) by means of a thread (8).

4. The clamp device as claimed in claim 1, characterized in that the guide face (9) is a cone face inclined with respect to the longitudinal direction to the slide rod (1).

5. The clamp device as claimed in claim 1, characterized in that a lining sleeve (10) is provided on the circumferential surface of the slide rod (1), the pin (5) passes through a wall hole (11) provided on the lining sleeve (10) and presses against the cone face (9) of the inner hole of the rotatable sleeve (7).

6. The clamp device as claimed in claim 1 or 5, characterized in that the end of the pin (5) which is inserted into the clamp hole (6), is a cone shaped head

7. The clamp device as claimed in claim 1 or 5, characterized in that the end of the pin (5), which presses against the cone face (9) is a spherical shaped head.
